# EUROPEAN PATENT APPLICATION

(11) **EP 2 573 730 A1**
(43) Date of publication of application: **27.03.2013**
(21) Application number: 11834087.6
(22) Date of filing: 16.05.2011
(51) Int. Cl.: G06Q 50/00, H04L 9/32

(54) **PERSONAL IDENTIFICATION SYSTEM AND METHOD**

(30) Priority: 20.10.2010 JP 2010235176
(71) Applicant: Hitachi, Ltd., Chiyoda-ku Tokyo 100-8280 (JP)
(72) Inventor: TAKATA Osamu, Tokyo 100-8220 (JP); KAGA Yosuke, Tokyo 100-8220 (JP); ISOBE Yoshiaki, Tokyo 100-8220 (JP); MIMURA Masahiro, Tokyo 100-8220 (JP); TAKAHASHI Nobuo, Tokyo 100-8220 (JP)
(74) Representative: Moore, Graeme Patrick
(86) International application number: PCT/JP2011/061236
(87) International publication number: WO 2012/053242

(57) **Abstract**

The present invention shortens the time required for watch list verification, and shortens the time required generally for the personal identification processing which includes watch list verification. In a personal identification system, a biometric information watch list comparison function (31) performs a first comparison of first biometric information in a traveler information DB (53), and biometric information on a biometric information watch list (52). Thereafter, a simplified alien immigration examination comparison function (41) performs a second comparison of the first biometric information in the traveler information DB (53), and second biometric information acquired by a biometric information acquisition function (62). As a result of the comparison, in the case where the difference between the time of the first comparison and the current time is within a previously defined time period, a terminal displays a first comparison result, and a second comparison result.

## Description

### Technical Field

The present invention relates to an identification system and a method thereof, and particularly to the identification system and the identification processing method preferable for a procedure at immigration.

### Background Art

Various technologies for efficiently performing immigration control at an airport and the like have been proposed. For example, Patent Document 1 discloses a pre-immigration control system including a joint control unit receiving passenger information input from a general-purpose terminal, and an advance passenger information database storing therein the passenger information received from the general-purpose terminal or by the joint control unit, wherein the joint control unit determines whether the passenger information satisfies a predetermined condition and, if the predetermined condition is satisfied, the joint control unit stores the passenger information in the advance passenger information database, or if the predetermined condition is not satisfied, the joint control unit transmits the unaccepted information to the general-purpose terminal without storing the passenger information in the advance passenger information database.

Chapter 4, System Architecture, of Non-Patent Document 1 also discloses a mechanism of an identification system using a biometric information watch list database, and Chapter 1, Introduction, of Non-Patent Document 1 describes an explanation of the United States Visitor and Immigrant Status Indicator Technology (US-VISIT).

### Prior Art Document

### Patent Document

Patent Document 1: Japanese Patent Application Publication No. 2005-215999
Non-Patent Document

Non-Patent Document 1: Privacy Impact Assessment Update for the US-VISIT Program, U.S. Department of Homeland Security, July 1st 2005. Chapter1, 4

### Summary of the Invention

### Problems to Be Solved by the Invention

Accordingly, with the mechanism of the identification system disclosed in Non-Patent Document 1, when the biometric information watch list database has many entries, the watch list check may take a long time. Furthermore, with this system, an entire identification process including the watch list check may take a long time.

The present invention thus provides an identification verification system and a method thereof capable of reducing time required for the watch list check even when the biometric information watch list database has many entries.
The present invention also reduces time required for the entire identification process including the watch list check. Means for Solving the Problems

The identification system according to the invention is preferably configured as an identification system including a user information DB storing therein user information including biometric information of a user captured from a terminal, a biometric information watch list DB storing therein biometric information of persons on the blacklist captured from the terminal, an identification server having a biometric information watch list matching function of determining whether or not any biometric information that matches the biometric information stored in the user information DB is in the biometric information watch list, and a verification server having a passenger to be examined by abbreviated immigration control procedure matching function of comparing the biometric information stored in the user information DB with the biometric information captured by a capturing function of the biometric information and thereby determining whether both information pieces are of an identical person or not,
wherein the biometric information watch list matching function performs first matching between first biometric information stored in the user information DB and the biometric information in the biometric information watch list,
the passenger to be examined by abbreviated immigration control procedure matching function then performs second matching between the first biometric information in the user information DB and second biometric information captured by the biometric information capturing function, and
if a difference between a first matching time and the current time is within a predetermined time period, a result of the first matching and a result of the second matching are displayed on a screen of the terminal.

A preferable identification system according to the present invention may also be configured as an identification system including a passenger information DB storing therein ID information and biometric information, an ID information watch list DB storing therein ID information of persons on the blacklist, a terminal having an ID information capturing function of capturing ID information of a passenger and a biometric information capturing function of capturing biometric information of the passenger, an ID information matching server having an ID information watch list matching function of determining whether or not any ID information that matches the information in the passenger information DB is in the ID information watch list, and a verification server having a passenger to be examined by abbreviated immigration control procedure matching function of comparing the biometric information in the passenger information DB with the biometric information captured by the biometric information capturing function and thereby determining whether both information pieces are of an identical person or not,
wherein the ID information watch list matching function performs first matching between the ID information in the passenger information DB and the ID information in the ID information watch list,
the passenger to be examined by abbreviated immigration control procedure matching function performs second matching between first biometric information stored in the passenger information DB and second biometric information captured by the biometric information capturing function, and
if a difference between a first matching time and the current time is within a predetermined time period, the terminal displays a result of the first matching and a result of the second matching.

The identification processing method according to the invention is preferably configured as an identification processing method for identifying a user in a system having a server connected to a terminal via a network, including: a step of storing user information including biometric information of a user captured from the terminal in a user information DB; a step of storing biometric information of persons on the blacklist captured from the terminal in a biometric information watch list DB; a biometric information watch list matching step of determining whether or not any biometric information that matches the biometric information stored in the user information DB is in the biometric information watch list in an identification server; a passenger to be examined by abbreviated immigration control procedure matching step of comparing the biometric information in the user information DB with the biometric information captured by the biometric information capturing function and thereby determining whether or not both biometric information pieces are of an identical person in a verification server; a step of performing first matching between first biometric information stored in the user information DB and the biometric information in the biometric information watch list at the biometric information watch list matching step;
a step of subsequently performing second matching between the first biometric information stored in the user information DB and second biometric information captured by the biometric information capturing function with the passenger to be examined by abbreviated immigration control procedure matching function; and
a step of, if a difference between a first matching time and the current time is within a predetermined time period, displaying a result of the first matching and a result of the second matching on a screen of the terminal.

### Effect of the Invention

With the present invention, the time required for the watch list check can be reduced even when the biometric information watch list database has many entries. The time required for the entire identification process including the watch list check can also be reduced.

### Brief Description of the Drawings

[Fig. 1] A diagram showing an exemplary configuration of an identification system according to an embodiment (first embodiment).
[Fig. 2] A diagram showing an example of an ID information watch list 51 according to the first embodiment.
[Fig. 3] A diagram showing an example of a multi-modal biometric information watch list 52 according to the first embodiment.
[Fig. 4] A diagram showing an example of passenger information 53 according to the first embodiment.
[Fig. 5] A diagram showing a relation among first to third embodiments.
[Fig. 6] A diagram showing an example of an immigration control processing sequence at a first entrance to the country according to the first embodiment.
[Fig. 7] A diagram showing a processing sequence of matching ID information in the passenger information 53 with information added to the ID information watch list 51 according to the first embodiment.
[Fig. 8] A diagram showing an example of a processing sequence of matching multi-modal biometric information in the passenger information 53 with information added to the multi-modal biometric information watch list 52 according to the first embodiment.
[Fig. 9] A diagram showing an example of an immigration control processing sequence in a case of entering the country again after the first immigration according to the first embodiment (part 1).
[Fig. 10] A diagram showing an example of an immigration control processing sequence in a case of entering the country again after the first immigration according to the first embodiment (part 2).
[Fig. 11] A diagram showing an example of an immigration control processing sequence in a case of entering the country again after the first immigration according to the first embodiment (part 3).
[Fig. 12] A diagram showing an exemplary configuration of an identification system according to the second embodiment.
[Fig. 13] A diagram showing an example of the passenger information 53 according to the second embodiment.
[Fig. 14] A diagram showing an exemplary configuration of an identification system according to the third embodiment.
[Fig. 15] A diagram showing an example of the passenger information 53 according to the third embodiment.
[Fig. 16] A diagram showing an example of a sequence of registering ID information, multi-modal biometric information, and scheduled arrival time and date to the passenger information 53 according to the third embodiment.
[Fig. 17] A diagram showing an example of a processing sequence of performing an ID information watch list matching and a biometric information watch list matching according to the third embodiment.
[Fig. 18] A diagram showing an example of the passenger information 53 according to the third embodiment.
[Fig. 19] A diagram showing an example of a sequence of registering the ID information and the scheduled arrival time and date to the passenger information 53 according to the third embodiment.
[Fig. 20] A diagram showing an example of a sequence of determining whether a passenger is registered to the passenger information 53 according to a fourth embodiment.
[Fig. 21] A diagram showing an exemplary configuration of an identification system according to a fifth embodiment.
[Fig. 22] A diagram showing a hardware configuration of each device in the identification system according to the present embodiment.

### Mode for Carrying out the Invention

In the following, several embodiments of the present invention will be described in detail with reference to the drawings.
In the following description, "ID information" collectively refers to identifier (identifier) information such as a passport number and ID (identity) card number and other identity information such as a nationality, a name, a sex, a date of birth, and the like on the passport and the ID card. "Watch list" herein refers to, as in an explanation by the U.S. Department of Homeland Security, "the "No Fly" list includes individuals who are prohibited from boarding an aircraft" or "the "Selectee" list includes individuals who must undergo additional security screening before being permitted to board on an aircraft."
A control procedure that an immigration control officer performs at a port of entry with a support of an embarkation disembarkation management system when a passenger enters a country is referred to herein as "immigration control."

A first embodiment, a second embodiment, a third embodiment, and a fourth embodiment represent examples of the embarkation disembarkation management system for an alien at an international airport. Although the examples of the international airport are shown here, the embarkation disembarkation management system can be similarly applied to an international seaport and a border gate on a road.

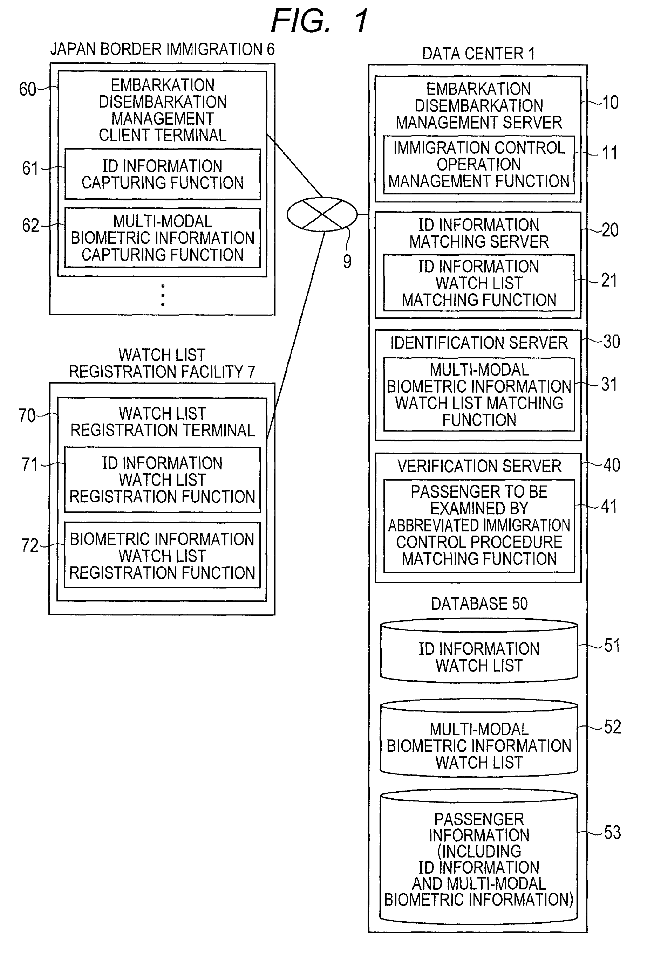

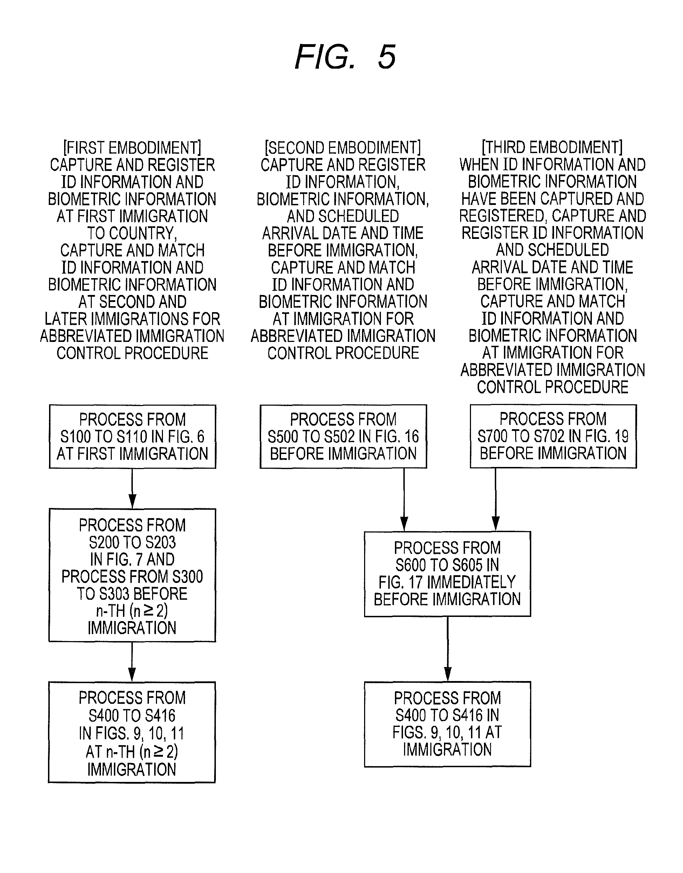

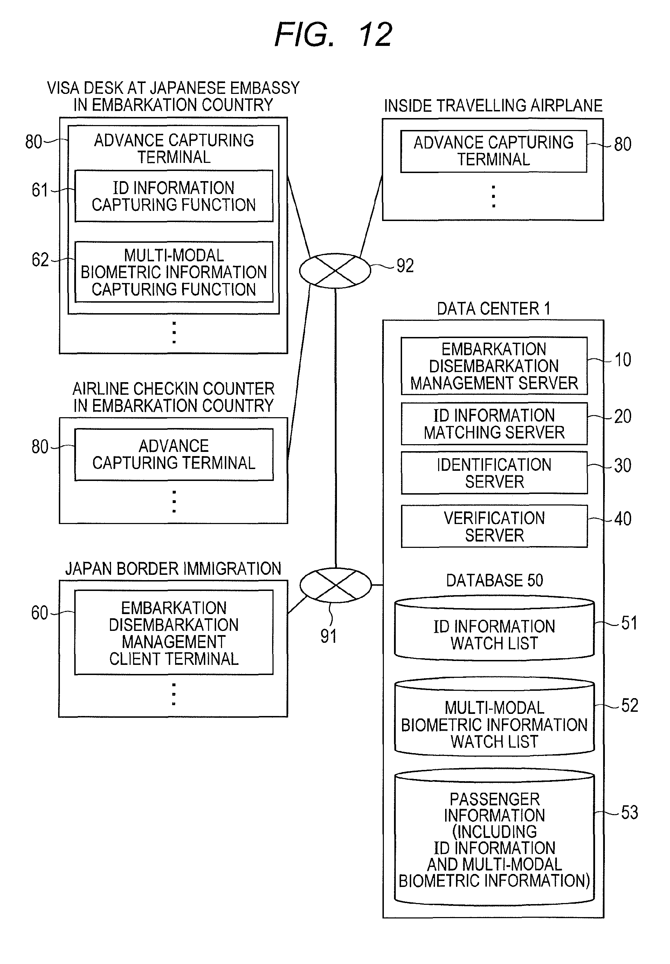

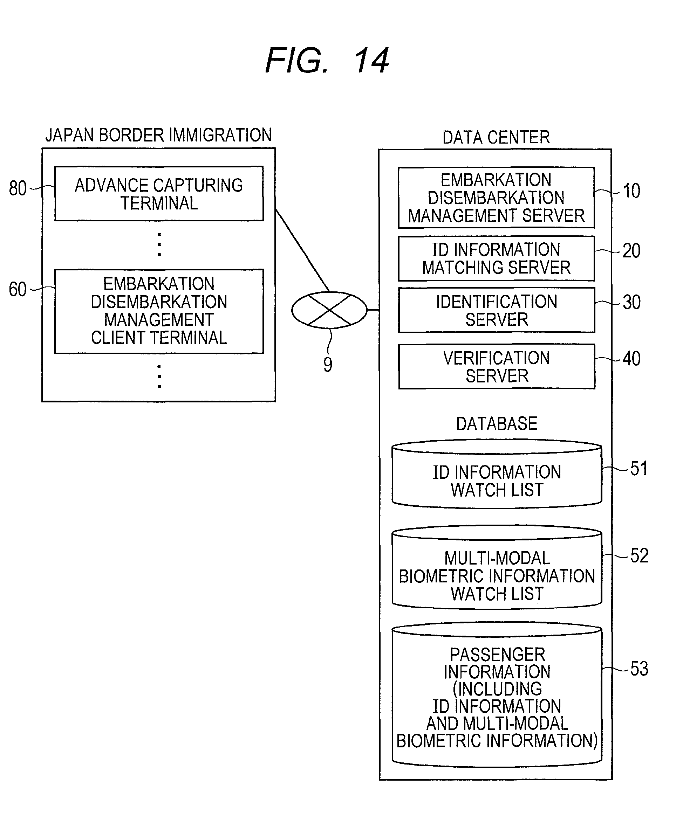

Diagrammatic relation among the first embodiment, the second embodiment, and the third embodiment is shown in Fig. 5. The first embodiment shows, with the system configuration in Fig. 1, an example of performing an abbreviated immigration control procedure by capturing and registering the ID information and multi-modal biometric information at a first immigration and then capturing again and matching the ID information and the multi-modal biometric information at second and later immigrations.
The second embodiment shows with the system configuration in Fig. 12 or Fig. 14 an example of performing the abbreviated immigration control procedure by capturing and registering the ID information, the multi-modal biometric information, and a scheduled arrival time and date before immigration and then capturing again and matching the ID information and the scheduled arrival time and date at the immigration.

The third embodiment shows with the system configuration in Fig. 12 or Fig. 14 an example of performing the abbreviated immigration control procedure by capturing and registering the ID information and the scheduled arrival time and date of a passenger whose ID information and multi-modal biometric information have already been captured before immigration, and then capturing again and matching the ID information and the multi-modal biometric information.

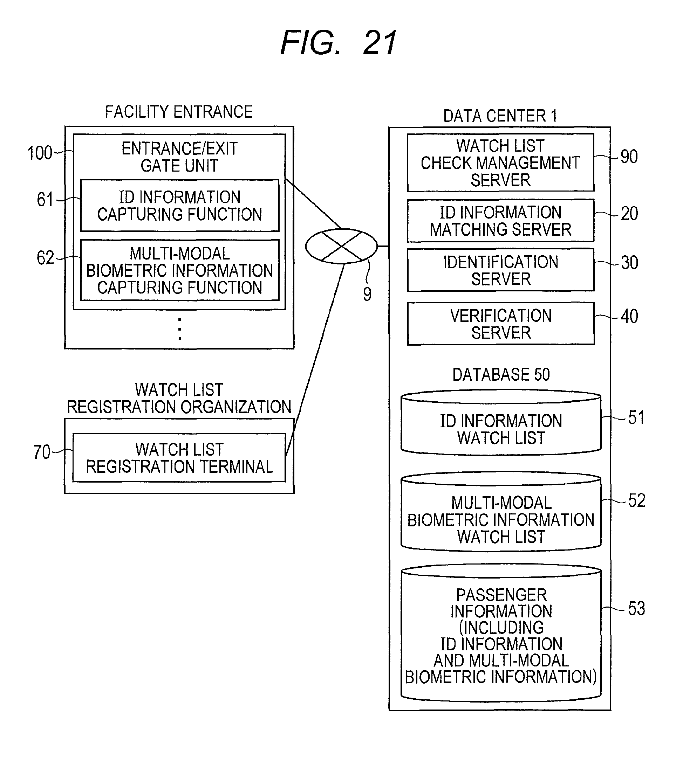

The fourth embodiment shows an example of capturing the ID information and determining whether the ID information and the multi-modal biometric information of the corresponding passenger has already been captured with the system configuration in Fig. 14.
The fifth embodiment shows an example of an entrance check (including a watch list check) using an entrance/exit gate unit at an entrance of a facility with the system configuration in Fig. 21. An abbreviated entrance check is performed by capturing and registering the ID information and the multi-modal biometric information at a first entry and then capturing again and matching the ID information and the multi-modal biometric information at second and later entries.

### First Embodiment

Fig. 1 shows the configuration of the identification system.
The identification system is constituted by a data center 1, a Japan border immigration 6, and a watch list registration facility 7 connected to one another via a network 9.
The data center 1 includes an embarkation disembarkation management server 10, an ID information matching server 20, an identification server 30, a verification server 40, and a database (DB) 50. The DB 50 includes each database of an ID information watch list 51, a multi-modal biometric information watch list 52, and passenger information (passenger information) (including the ID information and the multi-modal biometric information) 53. The Japan border immigration 6 is equipped with an embarkation disembarkation management client terminal 60, and the watch list registration facility 7 is equipped with a watch list registration terminal 70.

Next, the configuration of the data center 1 is described in detail.
The embarkation disembarkation management server includes an immigration control operation management function 11. The immigration control operation management function 11 manages an immigration control operation in combination with the embarkation disembarkation management client terminal 60 using each function of the ID information matching server 20, the identification server 30, and the verification server 40, and each piece of information in the ID information watch list 51, the multi-modal biometric information watch list 52, and the passenger information 53.

The ID information matching server 20 includes an ID information watch list matching function 21, and the ID information watch list matching function 21 determines whether or not any ID information that matches the ID information captured by an ID information capturing function 61 is in the ID information watch list 51. It also determines whether or not any ID information that matches the ID information in the passenger information 53 is in the ID information watch list 51.

The identification server 30 includes a multi-modal biometric information watch list 31, and the multi-modal biometric information watch list 31 determines whether or not any biometric information that matches the biometric information captured by a multi-modal biometric information capturing function 62 is in the multi-modal biometric information watch list 52. It also determines whether or not any biometric information that matches the multi-modal biometric information in the passenger information 53 is in the multi-modal biometric information watch list 52.

The biometric information watch list matching function 31 and the passenger to be examined by abbreviated immigration control procedure matching function 41 use multi-modals (a plurality of types of biometric information such as, for example, face, fingerprint, and finger vein) captured by the multi-modal biometric information capturing function 62 for the matching. Thus, even when a capturing quality of a certain type of the biometric information is low due to environmental effect, more accurate matching and determination are possible in general only if the capturing quality of other information is high. Moreover, even when a certain type of the biometric information is modified on purpose, a correct determination is possible only if other biometric information can be captured correctly.
The verification server 40 includes a passenger to be examined by abbreviated immigration control procedure matching function 41, and the passenger to be examined by abbreviated immigration control procedure matching function 41 compares the biometric information associated with the ID information captured by an ID information capturing function 61 in the passenger information 53 with the multi-modal biometric information captured by the multi-modal biometric information capturing function 62 to determine whether both biometric information pieces are of an identical person.

Next, the embarkation disembarkation management client terminal 60 includes the ID information capturing function 61 and the multi-modal biometric information capturing function 62. The ID information capturing function 61 is a function of reading ID information of a passenger from a passport and an ID card carried by the passenger using a passport reader and a card reader. The multi-modal biometric information capturing function 62 is constituted by, for example, a camera capturing a facial image, a sensor capturing fingerprint and finger vein information, and a signal processing function of the information captured from the camera and the sensor, and captures a plurality of types of biometric information (facial image, fingerprint, finger vein) from the passenger.

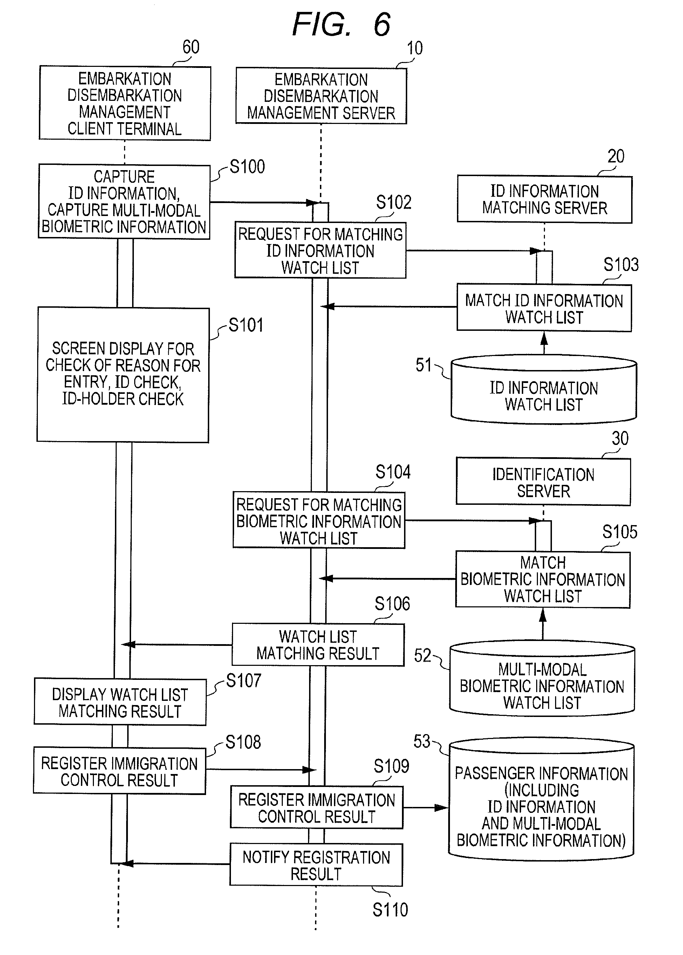

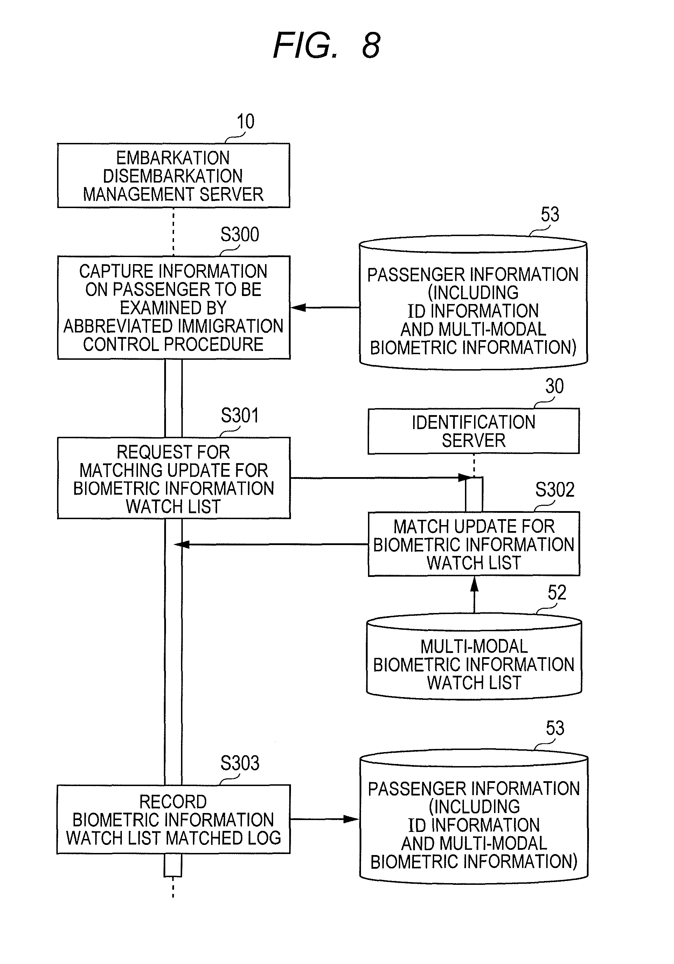

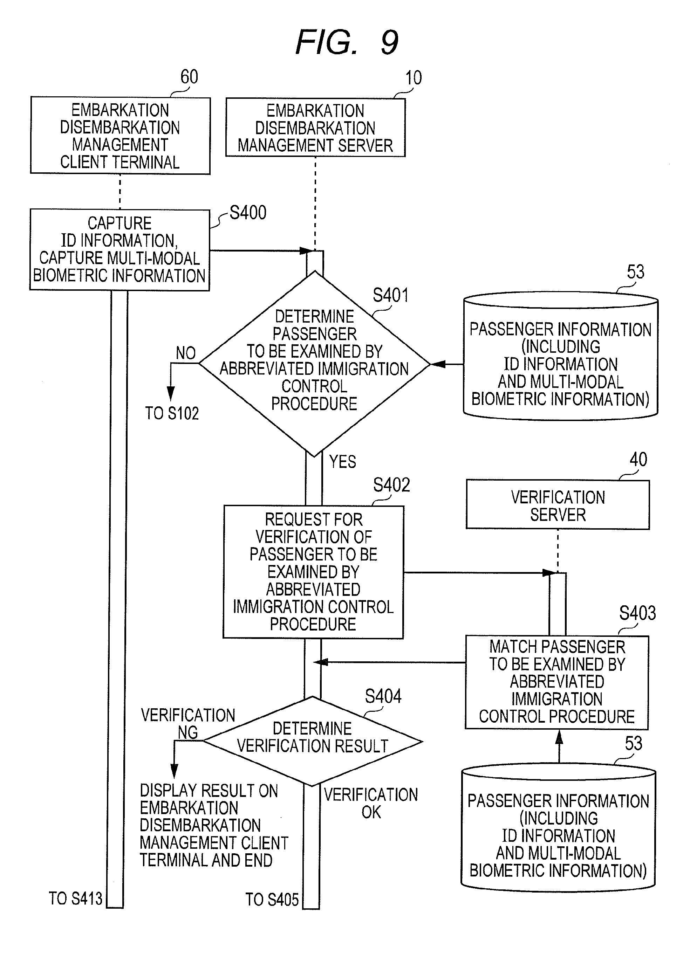

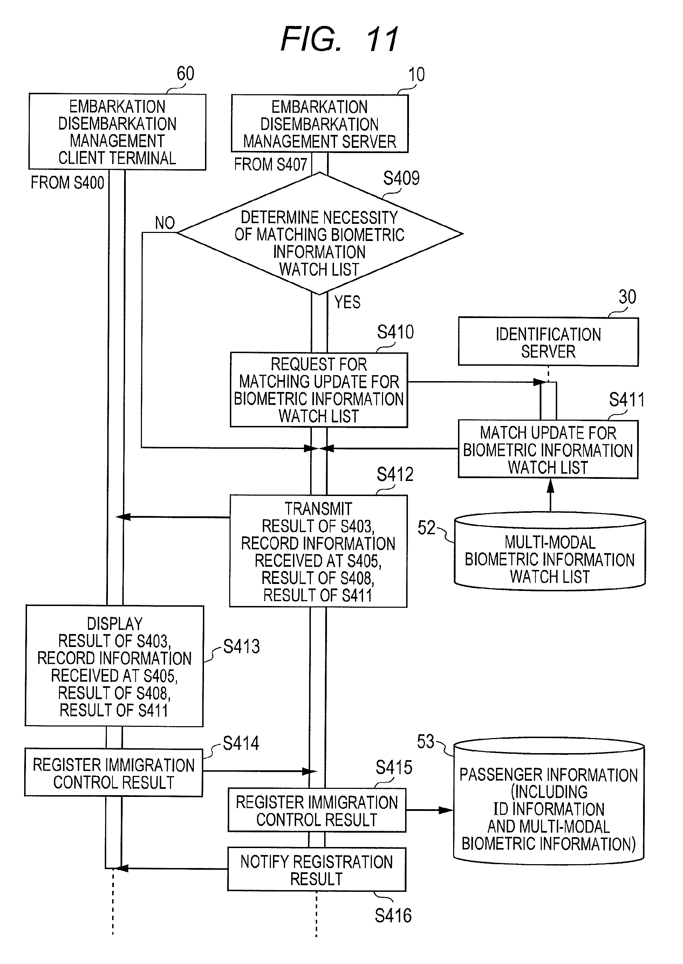

For example, consider a case of shifting to the system according to the present invention where the biometric information watch list matching is conventionally performed using only the fingerprint information and where only the fingerprint information is stored in the watch list. Using a single sensor capturing the fingerprint and finger vein information, even when the present system is applied, the fingerprint watch list information stored in the past can be effectively used by performing the matching with the fingerprint watch list information stored in the past using only the fingerprint at S105 in Fig. 6, S302 in Fig. 8, and S411 in Fig. 11. At the same time, by performing S403 in Fig. 9 using both the fingerprint and the finger vein after the present system is applied, a stricter and faster processing at S403 is possible compared with the case of performing S403 in Fig. 9 using a single type of biometric information (for example, the fingerprint alone).

The watch list registration terminal 70 includes an ID information watch list registration function 71 and a biometric information watch list registration function 72. The ID information watch list registration function 71 is a function of registering the ID information such as persons on the blacklist to the ID information watch list 51. The biometric information watch list registration function 72 is a function of registering the biometric information such as the persons on the blacklist to the multi-modal biometric information watch list 52.

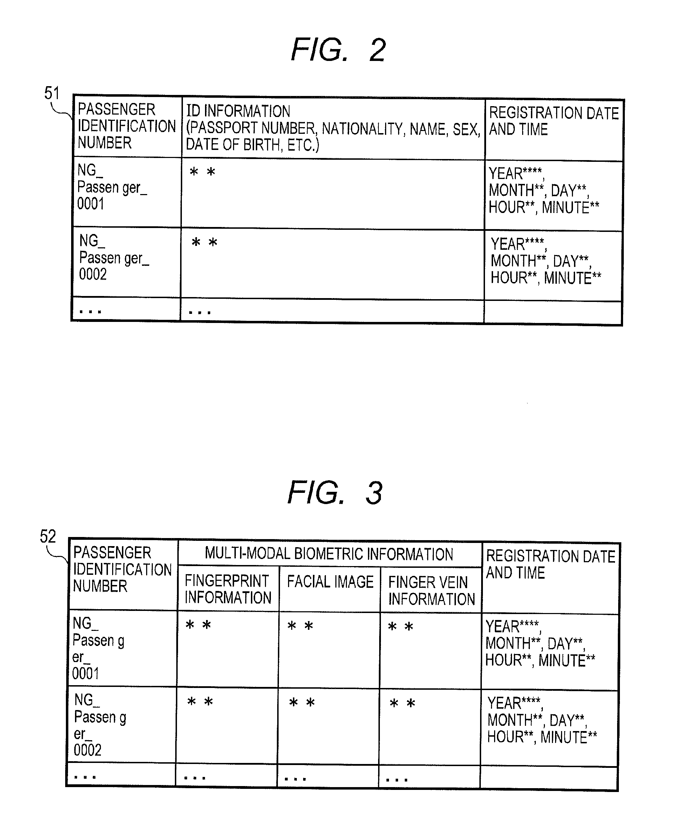

The watch list registration terminal 70 registers the ID information using the ID information watch list registration function 71 when only the ID information of the persons on the blacklist has been captured. When the ID information and the biometric information of the persons on the blacklist have been captured, the ID information watch list registration function 71 and the biometric information watch list registration function 72 register the ID information and the multi-modal biometric information to the ID information watch list 51 (see Fig. 2) and the multi-modal biometric information watch list 52 (see Fig. 3), respectively, with an identical passenger identification number applied thereto (so as to be able to specify that the information pieces are of the same person).

Fig. 2 shows an example of the ID information watch list 51.
The ID information watch list 51 is constituted by ID information including a passenger identification number, a passport number, a nationality, a name, and the like, and a registration date and time, and stores therein the ID information of the persons on the blacklist. The ID information watch list 51 is constantly updated with its information by the information being added or deleted upon receipt of a request from the ID information watch list registration function 71 at a given timing.

Fig. 3 shows an example of the multi-modal biometric information watch list 52.
The multi-modal biometric information watch list 52 is constituted by the passenger identification number as in the ID information watch list 51, the multi-modal biometric information (fingerprint information, facial image information, and finger vein information), and the registration date and time, and stores therein the biometric information of the persons on the blacklist. The multi-modal biometric information watch list 52 is constantly updated with its information by the information being added or deleted upon receipt of a request from the biometric information watch list registration function 72 at a given timing.

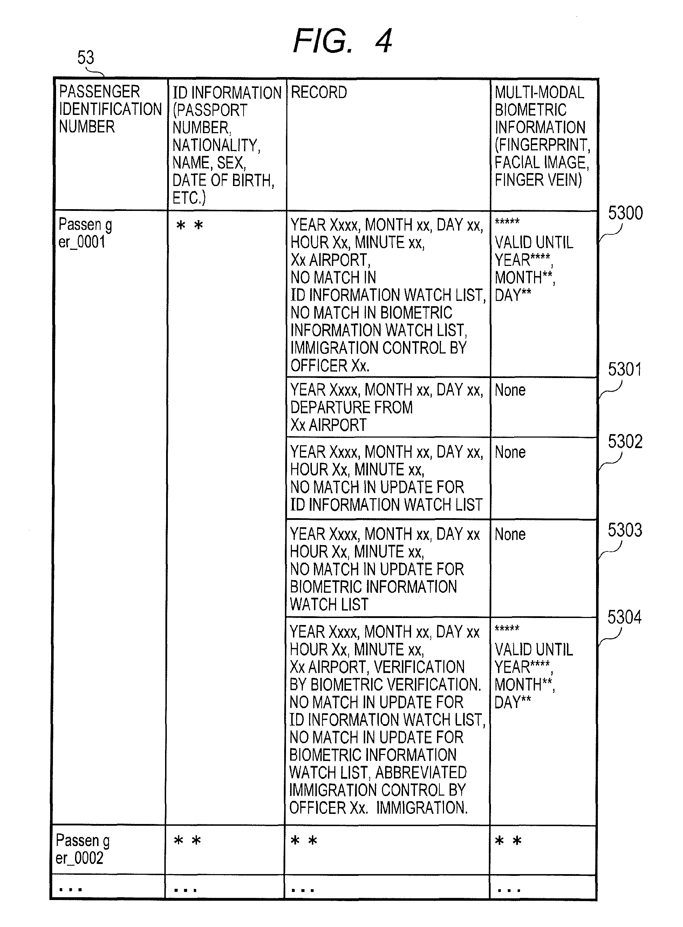

Fig. 4 shows an example of the passenger information 53.
The passenger information 53 includes the passenger identification number, the ID information, a record of the passenger, and the multi-modal biometric information captured at the event recorded on the record along with an expiration date. The expiration date is set in a year in which the end of a predetermined period of time comes after the date of creation of the record (year of passport renewal).

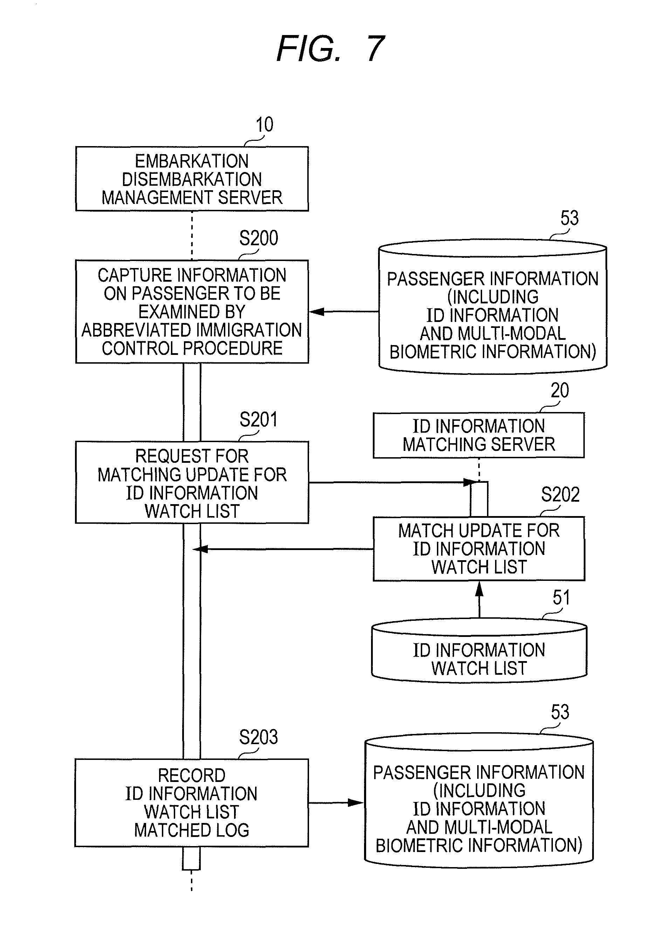

Here, as shown in Fig. 4, a plurality of records (5300 to 5304) can be recorded with respect to one passenger. In the illustrated example, an immigration control record and the multi-modal biometric information are recorded in 5300, a departure record is recorded in 5301, and a log of an update for the ID information watch list by the process shown in Fig. 7 is recorded in 5302. Furthermore, a log of an updated for the biometric information watch list is recorded in 5303 by the process shown in Fig. 8, and the immigration control record and the multi-modal biometric information are recorded in 5304.

As shown in Fig. 5, in the first embodiment, the ID information and the multi-modal biometric information are captured at the first immigration (process shown in Fig. 6), the ID information watch list matching (process shown in Fig. 7) and the biometric information watch list matching (process shown in Fig. 8) are performed before the second and later immigrations, and the ID information and the multi-modal biometric information are captured at the second and later immigrations to perform the abbreviated immigration control procedure (processes in Figs. 9, 10, 11).

Fig. 6 shows an immigration control processing sequence at the first immigration.
The embarkation disembarkation management client terminal 60 captures the ID information using the reader connected thereto and the ID information capturing function 61, captures the multi-modal biometric information using the camera, a fingerprint/finger vein scanner, and the multi-modal biometric information capturing function 62, and transmits them to the embarkation disembarkation management server 10 (S100).

The embarkation disembarkation management client terminal 60 then displays a screen of an immigration control operation contents (verbal check of reason for entry, ID (passport or ID card) check, ID-holder check (visual check of whether a photograph on the ID matches the passenger) (S101). An operator performs the immigration control along the screen display of the immigration control operation contents. While the time required by the operator for the immigration control operation varies from case to case, it may take a long time.

The embarkation disembarkation management server 10 transmits the ID information and a watch matching request received at S100 to the ID information matching server 20 (S102). The ID information matching server 20 searches the ID information watch list 51 for the received ID information to see whether there is any information that matches or is similar to the ID information, and responds to the embarkation disembarkation management server 10 with the result (S103). The result responded to the embarkation disembarkation management server 10 at S103 may be presence of the matching or similar information or an information list of the ID information watch list 51 with high similarity.

The embarkation disembarkation management server 10 also transmits the multi-modal biometric information and the watch matching request received at S100 (S104), checks whether there is any information that matches or is similar to the received multi-modal biometric information, and responds to the embarkation disembarkation management server 10 with the result (S105). The result responded to the embarkation disembarkation management server 10 may be the presence of the matching or similar information or an information list of the biometric information watch list 52 with high similarity.

The embarkation disembarkation management server 10 transmits the matching results of S103 and S105 to the embarkation disembarkation management client terminal 60 (S106), and the embarkation disembarkation management client terminal 60 displays them on the screen (S107).

The operator of the embarkation disembarkation management client terminal 60 determines whether or not the passenger whose ID information and multi-modal biometric information have been captured at S100 corresponds to the watch list based on the information displayed at S107, and inputs the immigration control result determined in combination with the immigration control result requested at S101 and performed by the operator to the embarkation disembarkation management client terminal 60. The embarkation disembarkation management client terminal 60 transmits them to the embarkation disembarkation management server 10 (S108). The embarkation disembarkation management server 10 registers the result received at S108 to the passenger information 53 (S109), and notifies the embarkation disembarkation management client terminal 60 of completion of the registration (S110). An example of the contents registered to the passenger information 53 is 5300 in Fig. 4.

A process performed at a given timing after the immigration control process at the passenger's first immigration and then the departure of the passenger, and before the next immigration, is shown in Figs. 7 and 8. The process shown in Figs. 7 and 8 may be performed regularly (for example, every day, every week, every month), or at any given timing.

Fig. 7 shows a processing sequence for performing a matching between the ID information in the passenger information 53 and the information added to the ID information watch list 51 after the matching with the ID information watch list performed at S103 in Fig. 6. A particular explanation is given below.

As a result of the process shown in Fig. 6 and the process at the departure, the passenger information 53 is recorded with the information of 5300 and 5301. In the process shown in Fig. 7, the embarkation disembarkation management server 10 reads the ID information and the record of the passenger from the passenger information 53 (S200). In the example shown in Fig. 4, the record of the passenger (Passenger_0001) includes the information of 5300 and 5301 recorded therein, and they are read in. At S200, the information of some of passengers recorded in the passenger information 53 may be read in, or the information of all passengers may be read in. It is assumed herein that the ID information and the records 5300 and 5301 associated with one passenger (Passenger_0001) are read in.

The embarkation disembarkation management server 10 transmits the date and time on which the ID information watch list matching was last performed in the read record (immigration control date and time in the record 5300), ID information, and a request for matching the update for the watch list to the ID information matching server 20 (S201).
The ID information matching server 20 reads out the received information of the registration date and time after the "date and time on which the ID information watch list matching was last performed" (for the update) from the ID information watch list 51. It then checks whether or not the ID information received at S201 matches or is similar to the read information, and responds to the embarkation disembarkation management server 10 with the result (S202). The embarkation disembarkation management server 10 adds the result to a record area of the passenger information 53 (S203). It is added to 5302 in the example shown in Fig. 4.

Fig. 8 shows the processing sequence for performing the matching between the multi-modal biometric information in the passenger information 53 and the information added to the multi-modal biometric information watch list 52 after the biometric information watch list matching performed at S105 in Fig. 6. A particular explanation is given below.

As a result of the process shown in Fig. 6 and the process at the departure, the passenger information 53 is recorded with the information of 5300 and 5301. In the process shown in Fig. 8, the embarkation disembarkation management server 10 reads the ID information, the record, and the multi-modal biometric information of the passenger from the passenger information 53 (S300).
In the example shown in Fig. 4, the record of the passenger (Passenger_0001) includes the information of 5300 and 5301 (also 5302 if the process shown in Fig. 7 has been additionally performed) recorded therein, and they are read in. At S300, the information of some of passengers recorded in the passenger information 53 may be read in, or the information of all passengers may be read in. It is assumed herein that the ID information and the records 5300, 5301, and 5302 associated with one passenger (Passenger_0001) are read in.

The embarkation disembarkation management server 10 transmits the date and time on which the biometric information watch list was last performed in the read record (immigration control date and time in the record 5300), the multi-modal biometric information, and the request for matching the update for the biometric information watch list to the identification server 30 (S301).

The identification server 30 reads out the information received at S301 of the registration date and time after the "date and time on which the biometric information watch list matching was last performed" (for the update) from the multi-modal biometric information watch list 52. It then checks whether or not the multi-modal biometric information received at S301 matches or is similar to the read information, and responds to the embarkation disembarkation management server 10 with the result (S302). The embarkation disembarkation management server 10 registers the result to the record area of the passenger information 53 (S303). It is added to 5303 in the example shown in Fig. 4.

Figs. 9, 10, and 11 show immigration control processing sequences of departing from and then entering the country again after the immigration is performed on the passenger according to the sequence shown in Fig. 6. After the process shown in Fig. 6, the sequences shown in Figs. 7 and 8 are performed zero or more times, and then the sequences shown in Figs. 9, 10, and 11 are performed. The present sequences are described in detail below.
It is assumed here that Figs. 6, 7, and 8 have been performed and the passenger information 53 stores therein 5300, 5301, 5302, and 5303 as shown in Fig. 4.

The explanation is given first with reference to the sequence shown in Fig. 9.
The embarkation disembarkation management client terminal 60 captures the ID information using the reader connected thereto and the ID information capturing function 61, captures the multi-modal biometric information using the camera, the fingerprint/finger vein scanner, and the multi-modal biometric information capturing function 62, and transmits them to the embarkation disembarkation management server 10 (S400).

The embarkation disembarkation management server 10 determines whether or not any record that corresponds to the ID information received at S400 is in the passenger information 53 (S401). If there is no corresponding customer record (NO at determination of S401), since it is not the second or later immigration but the first immigration, the immigration control processing sequence at the first immigration shown at S102 and later in Fig. 6 is performed.

If there is a corresponding customer record (YES at determination of S401), the embarkation disembarkation management server 10 requests the verification server 40 for determination (verification) of whether the passenger of which multi-modal biometric information was captured at S400 is same as the passenger of the passenger information 53 (S402). At S402, the request is made with the ID information and the multi-modal biometric information received at S400 attached thereto.

The verification server 40 identifies the passenger identification number (Passenger_0001 in Fig. 4) that matches the ID information received at S402, and captures the corresponding multi-modal biometric information (5300 in Fig. 4). If it is within the expiration date, it compares the multi-modal biometric information received at S402 with the multi-modal biometric information registered to 5300, determines whether the information pieces are of the same person or not, and responds to the embarkation disembarkation management server 10 with the result (S403). At S403, it responds with an NG result of the verification if it is determined that the information pieces are not of the same person, and responds with an OK result of the verification if it is determined to be of the same person (S404).

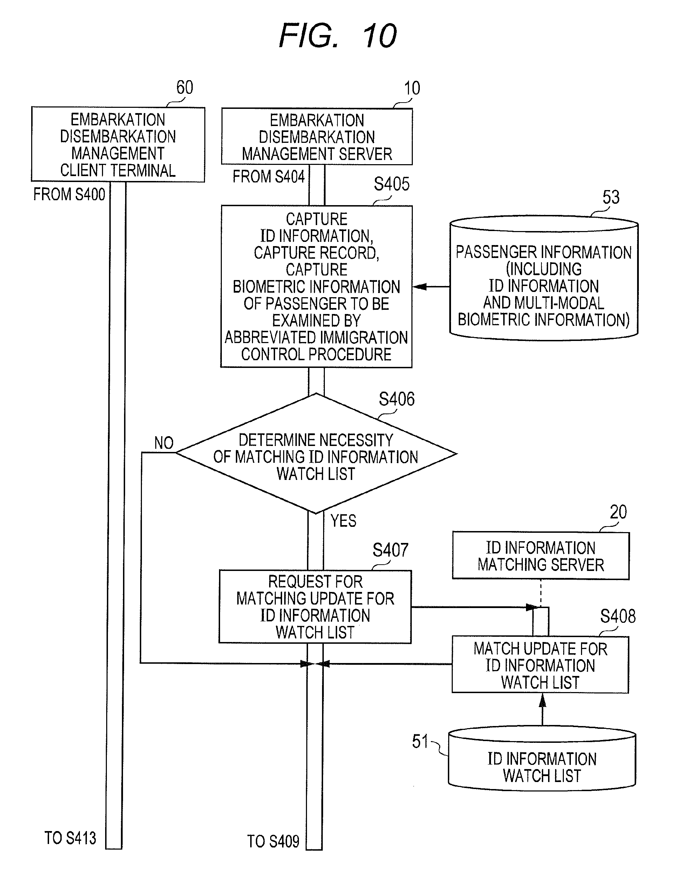

The matching at S403 can be performed using any one of the facial image, the fingerprint, and the finger vein, or a combination thereof. The matching with a combination of a plurality of types of the biometric information (for example, finger print and finger vein) provides either or both of the following effects compared with the matching with one type of biometric information (for example, fingerprint). (1) More accurate matching becomes possible. (2) If it is difficult to capture one type of the biometric information (for example, fingerprint) of the passenger due to the environmental effect or an individual trait, cases in which the matching is not possible are reduced by matching with the other type of the biometric information (for example, finger vein).
The embarkation disembarkation management server 10 transmits, if the result received at S403 is verification NG, the result to the embarkation disembarkation management client terminal 60, and the embarkation disembarkation management client terminal 60 displays it to terminate the process. When it is verification OK, the process proceeds to S405 in Fig. 10.

Next, the sequence in Fig. 10 is referenced.
The embarkation disembarkation management server 10 reads in the record and the multi-modal biometric information corresponding to the ID information received at S400 (S405). In the example shown in Fig. 4, it reads in 5300, 5301, 5302, and 5303.

The embarkation disembarkation management server 10 captures the time of the latest record (5302) among the ID information watch list matching result records (5300 and 5302) of the records read in, and determines whether a difference from the current time is within a predetermined time period (for example, one year, one month, one day, one hour, 10 minutes, and the like) (S406). If it is within the predetermined time period, it is determined that the ID information watch list matching has been performed on the latest watch list and that the matching of the update is not necessary (NO at S406), and the process proceeds to S409. In this case, the steps of S407 and S408 can be omitted to reduce the processing time.

On the other hand, if the difference from the current time is greater than the predetermined time period (YES at S406), it is determined that the matching of the update for the ID information watch list is necessary, and the process proceeds to S407. The embarkation disembarkation management server 10 transmits a request for matching the update for the ID information watch list including the time of the latest record (5302) and the ID information received at S400 to the ID information matching server 20 (S407).

The ID information matching server 20 extracts the ID information of the registration date and time after the time of the latest record (5302) received at S407 from the ID information watch list 51. It then compares the ID information received at S407 with the extracted ID information to see whether or not there is any matching or similar one, and responds to the embarkation disembarkation management server 10 with the result (S408).

Next, the sequence in Fig. 11 is referenced.
The embarkation disembarkation management server 10 captures the time of the latest record (5303) among the biometric information watch list matching result records (5300 and 5303) of the records read in at S405, and determines whether the difference from the current time is within a predetermined time period (for example, one year, one month, one day, one hour, 10 minutes, and the like) (S409). If it is within the predetermined time period, it is determined that the biometric information watch list matching has been performed on the latest watch list and that the matching of the update is not necessary (NO at S409), and the process proceeds to S412. In this case, the steps of S410 and S411 can be omitted to reduce the processing time.

On the other hand, if the difference from the current time is greater than the predetermined time period, it is determined that the matching of the update for the biometric information watch list is necessary (YES at S409), and the process proceeds to S410. The predetermined time period used for determination at S406 and S409 may or may not be the same.

The embarkation disembarkation management server 10 transmits a request for matching the update for the biometric information watch list including the time of the latest record (5303) and the multi-modal biometric information read in at S405 to the identification server 30 (S410).
The identification server 30 extracts the biometric information of the registration date and time after the time of the latest record (5303) received at S410 from the multi-modal biometric information watch list 52. It then compares the biometric information received at S410 with the extracted biometric information to see whether or not there is any matching or similar one, and responds to the embarkation disembarkation management server 10 with the result (S411).

The embarkation disembarkation management server 10 transmits the result received at S403, the record information received at S405 (records of 5300, 5301, 5302, 5303 in Fig. 4), the result received at S408, and the result received at S411 to the embarkation disembarkation management client terminal 60 (S412). The embarkation disembarkation management client terminal 60 receives and displays them (S413).

The operator of the embarkation disembarkation management client terminal 60 determines whether or not the passenger whose multi-modal biometric information was captured at S400 corresponds to the watch list based on the information displayed at S413 and inputs the immigration control result to the embarkation disembarkation management client terminal 60, and the embarkation disembarkation management client terminal 60 transmits it to the embarkation disembarkation management server 10 (S414). The embarkation disembarkation management server 10 registers the result received at S414 to the passenger information 53 (S415), and notifies the embarkation disembarkation management client terminal 60 that the registration is completed (S416). One example of the contents registered to the passenger information 53 at S415 is 5304 in Fig. 4.

A case of performing the process shown in Fig. 6 every time on a certain passenger is compared with a case in which the processes shown in Figs. 7 and 8 are performed in advance after the process shown in Fig. 6 and then a series of processes shown in Figs. 9, 10, 11 is performed at the next immigration. Comparing the case of performing the process shown in Fig. 6 at the second and later immigrations with the case of performing the series of processes shown in Figs. 9, 10, 11, the case of performing the series of processes shown in Figs. 9, 10, 11 can reduce the time required for the process.

According to the present embodiment, the following effects can be obtained.
The first effect is as follows.
In the process shown in Fig. 6, because the matching is performed on the entire ID information watch list 51 at the process of ID information watch list matching S103, the process requires longer time if the watch list is large scale. In the process shown in Figs. 9 to 11, however, if it is determined as NO at S406, the update matching for the ID information watch list S408 is not performed, and therefore the processing time can be reduced. Moreover, if it is determined as YES at S406, the update matching for the ID information watch list S408 is performed only on the portion updated from the process shown in Fig. 7, and therefore there are fewer matching items and the process is possible within a short time.

The second effect is as follows.
In the process shown in Fig. 6, because the matching is performed on the entire multi-modal biometric information watch list at the process of the biometric information watch list matching S106, the process requires longer time if the watch list is large scale. In the process shown in Figs. 9 to 11, however, if it is determined as NO at S409, the update matching for the biometric information watch list S411 is not performed, and therefore the processing time can be reduced. Moreover, if it is determined as YES at S409, the update matching for the biometric information watch list S411 is performed only on the portion updated from the process shown in Fig. 8, and therefore there are fewer matching items and the process is possible within a short time.

The third effect is as follows.
In the process shown in Fig. 6, the embarkation disembarkation management client terminal 60 performs the screen display of S101 after S100. If it takes a long time for the operator of the screen display S101 to perform the immigration control operation, the operator still requires the time to start an input operation for S108 even when the embarkation disembarkation management client terminal 60 receives a response from S106 and performs the display at S107. Accordingly, the processing time for the entire process shown in Fig. 6 becomes longer.
In the process shown in Figs. 9 to 11, however, the embarkation disembarkation management client terminal 60 can wait for the response S412 from the embarkation disembarkation management server 10 after S400 to proceed to S413. When the processing time from S400 to S412 is short enough, the entire processing time in Figs. 9 to 11 is shorter than that in Fig. 6.

### Second Embodiment

Fig. 12 shows the configuration of the identification system according to the second embodiment.
The data center 1 includes the embarkation disembarkation management server 10, the ID information matching server 20, the identification server 30, the verification server 40, and the DB 50 storing therein the ID information watch list 51, the multi-modal biometric information watch list 52, and the passenger information 53, and the data center 1 and the embarkation disembarkation management client terminal 60 installed at the Japan border immigration are connected to each other via an internal network 91.
Here, the configurations of the embarkation disembarkation management server 10, the ID information matching server 20, the identification server 30, the verification server 40, the ID information watch list 51, the multi-modal biometric information watch list 52, and the embarkation disembarkation management client terminal 60 are same as those of the first embodiment.

The configuration different from that of the first embodiment is that an advance capturing terminal 80 is installed at a visa desk of the Japanese Embassy in the passenger's embarkation country, or at an airline checkin counter in the passenger's embarkation country, or in a travelling airplane on which the passenger is boarded. The advance capturing terminal 80 is connected to the internal network 91 via an internal network 92. Here, the advance capturing terminal 80 includes the ID information capturing function 61 and the multi-modal biometric information capturing function 62. The ID information capturing function 61 and the multi-modal biometric information capturing function 62 are the same as those of the first embodiment.

An explanation is given below of a case in which the advance capturing terminal 80 is installed at the visa desk of the Japanese Embassy in the passenger's embarkation country according to the configuration shown in Fig. 12. For the installation of the advance capturing terminal 80 at the airline checkin counter in the passenger's embarkation country or in the travelling airplane on which the passenger is boarded, the installation site of the installation of the advance capturing terminal 80 in the following explanation may be substituted accordingly.

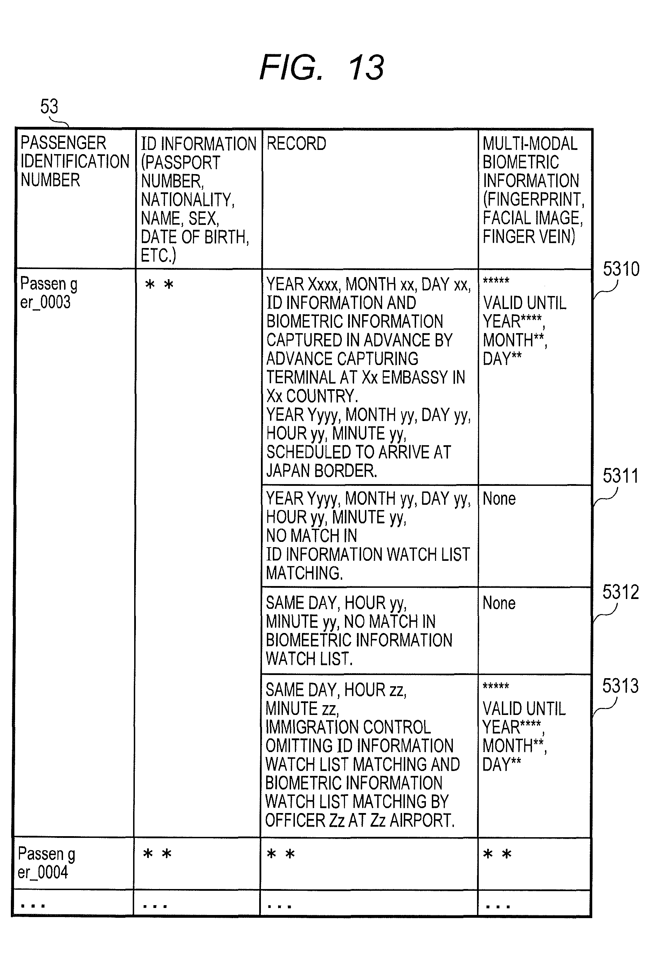

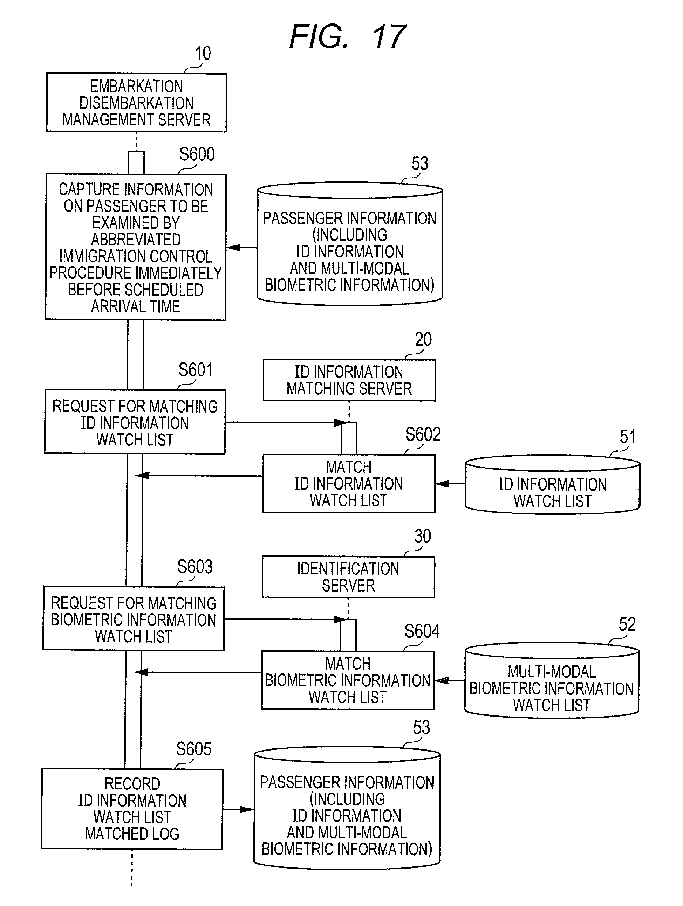

Fig. 13 shows an example of the passenger information 53 with the configuration shown in Fig. 12. The data configuration is same as that shown in Fig. 4. The ID information and the multi-modal biometric information captured by the advance capturing terminal 80 are recorded in 5310, and an ID information watch list matched log for the update as a result of the process shown in Fig. 17 is recorded in 5311. Furthermore, a biometric information watch list matched log for the update as a result of the process shown in Fig. 17 is recorded in 5312, and an abbreviated immigration control procedure record and the multi-modal biometric information as a result of the process shown in Figs. 9, 10, and 11 are recorded in 5313.

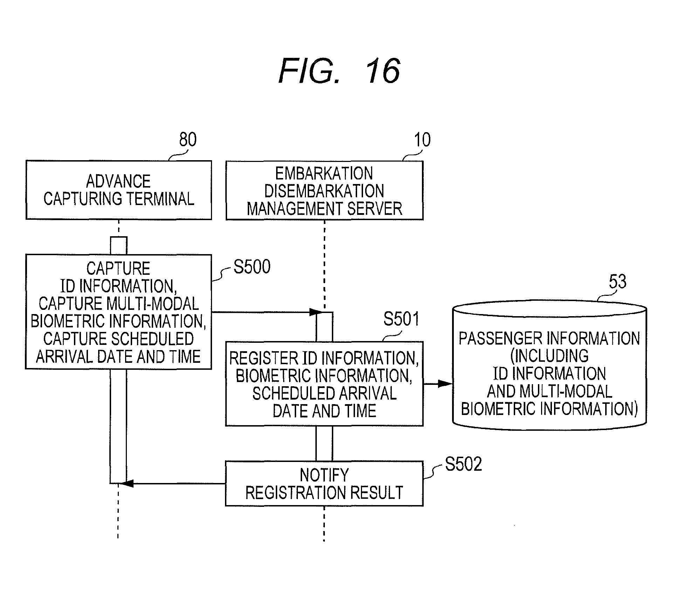

In Fig. 12, the passenger captures the ID information and the multi-modal biometric information at the advance capturing terminal 80 installed at the visa desk of the Japanese Embassy in the embarkation country (process shown in Fig. 16) before the immigration, the ID information watch list matching and the biometric information watch list matching (process shown in Fig. 17) are performed after the capturing and before the passenger arrives at the embarkation disembarkation management client terminal 60 at the Japan border immigration, and, upon the passenger's arrival at the embarkation disembarkation management client terminal 60 at the Japan border immigration, the embarkation disembarkation management client terminal 60 captures the ID information and the multi-modal biometric information, thereby performing the abbreviated immigration control procedure (process shown in Figs. 9, 10, 11), as shown in Fig. 5.

Although the advance capturing terminal 80 is installed at the visa desk of the Japanese Embassy in the passenger's embarkation country, or at the airline checkin counter in the passenger's embarkation country, or in the travelling airplane on which the passenger is boarded according to the second embodiment, it may be alternatively installed at an entrance to the Japan border immigration or the like.

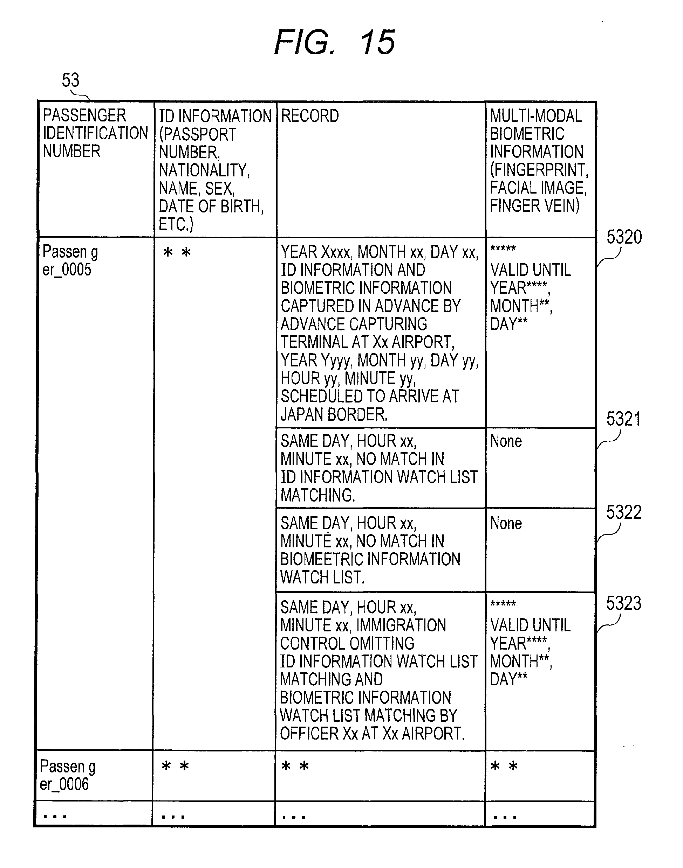

Fig. 14 shows an exemplary configuration of the system installed at the entrance to the Japan border immigration instead of the installation of the advance capturing terminal as shown in Fig. 12. Fig. 15 shows an example of the passenger information 53 in the system configuration shown in Fig. 14.
With the system configuration shown in Fig. 14, the ID information and the multi-modal biometric information are captured using the advance capturing terminal 80 installed at the entrance to the Japan border immigration, and registered to the passenger information 53 (process shown in Fig. 16). After capturing the ID information and the multi-modal biometric information and before arrival at the embarkation disembarkation management client terminal 60 (if there is a queue for the embarkation disembarkation management client terminal 60, while the passenger is in the queue), the ID information watch list matching and the biometric information watch list matching are performed (process shown in Fig. 17), and upon the passenger's arrival at the embarkation disembarkation management client terminal 60, embarkation disembarkation management client terminal 60 captures the ID information and the multi-modal biometric information to perform the abbreviated immigration control procedure (process shown in Figs. 9, 10, 11).

Fig. 16 shows a sequence of capturing the ID information, the multi-modal biometric information, and scheduled arrival time and date using the advance capturing terminal 80 and registering them to the passenger information 53, with the configuration shown in Fig. 12 (or Fig. 14). The sequence shown in Fig. 16 is described in detail below.
The advance capturing terminal 80 captures the ID information using the reader connected thereto and the ID information capturing function 61, captures the multi-modal biometric information using the camera, the fingerprint/finger vein scanner, and the multi-modal biometric information capturing function 62, captures the passenger's scheduled arrival time and date at the Japan border input by the operator, and transmits them to the embarkation disembarkation management server 10 (S500).
The embarkation disembarkation management server 10 registers the result received at S500 to the passenger information 53 (S501), and notifies the advance capturing terminal 80 that the registration is completed (S502). One example of the contents registered at S501 is 5310 in Fig. 13 (or 5320 in Fig. 15).

Fig. 17 shows a processing sequence of performing the ID information watch list matching and the biometric information watch list matching immediately before the passenger whose ID information and multi-modal biometric information were registered to the passenger information 53 by the process shown in Fig. 16 arrives at the Japan border immigration, with the configuration shown in Fig. 12 (or Fig. 14). It is assumed that 5310 in Fig. 13 has been registered to the passenger information 53 by the process shown in Fig. 16.

The processes of the ID information watch list matching and the biometric information watch list matching are described in detail below with reference to Fig. 17.
The embarkation disembarkation management server 10 regularly determines whether or not any scheduled arrival and registered advance captured record within a predetermined time period from the current time are in the passenger information 53 shown in Fig. 13 (or Fig. 15) (S600). As a result of the determination, if they are, the process shown in Fig. 17 is started. The predetermined time period may be, for example, one day, one hour, and the like. Hereinafter, a case in which the arrival time at the Japan border in 5310 (or 5320) of the passenger information 53 is within the predetermined time period from the current time (for example, within one hour) is presented.

The embarkation disembarkation management server 10 reads in 5310 (or 5320) of the passenger information 53 (S600). The embarkation disembarkation management server 10 then transmits the ID information read in at S600 to the ID information matching server 20 (S601). The ID information matching server 20 checks whether or not any information that matches or is similar to the received ID information is in the ID information watch list 51, and responds to the embarkation disembarkation management server 10 with the result (S602). The result responded to the embarkation disembarkation management server 10 at S602 may be the presence of the matching or similar information or the information list of the ID information watch list 51 with high similarity.

The embarkation disembarkation management server 10 transmits the multi-modal biometric information read in at S600 to the identification server 30 (S603), and the identification server 30 checks whether any information that matches or is similar to the received multi-modal biometric information is in the multi-modal biometric information watch list 52, and responds to the embarkation disembarkation management server 10 with the result (S604). The result responded to the embarkation disembarkation management server 10 may be the presence of the matching or similar information or the information list of the multi-modal biometric information watch list 52 with high similarity.

The embarkation disembarkation management server 10 adds the result received at S602 and the result received at S604 to the record of the passenger information 53 (S605). In the example shown in Fig. 13, the result of S602 is added to 5311 and the result of S604 is added to 5312 (in the example shown in Fig. 15, the result of S602 is added to 5321 and the result of S604 is added to 5322).
According to the second embodiment, as shown in Fig. 5, after the process shown in Fig. 17, when the passenger arrives at the embarkation disembarkation management client terminal 60 at the Japan border immigration, the embarkation disembarkation management client terminal 60 captures the ID information and the multi-modal biometric information and performs the abbreviated immigration control procedure (process shown in Figs. 9, 10, 11). The process shown in Figs. 9, 10, 11 is same as that of the first embodiment.

A case of performing the process shown in Fig. 6 with the exemplary configuration without the advance capturing terminal 80 installed as shown in Fig. 1 is compared with a case in which the processes shown in Figs. 16 and 17 are performed in advance with the exemplary configurations with the advance capturing terminal 80 installed as shown in Figs. 12 and 14 and then the processes shown in Figs. 9, 10, 11 are performed like the second embodiment. Comparing the time required for the process shown in Fig. 6 with the time for performing the series of processes shown in Figs. 9, 10, 11, the case of performing the series of processes shown in Figs. 9, 10, 11 can reduce the time required for the process.

According to the second embodiment, the following effects can be obtained.
Firstly, the first to third effects are obtained as with the first embodiment.

Furthermore, the fourth effect can be obtained.
According to the first embodiment, when the time lag between the timing of performing the process shown in Fig. 7 and the timing of performing the process shown in Figs. 9, 10, 11 is large, it is determined as YES at S406 in Fig. 10, which requires the time for the process at S408 and S409. Furthermore, when the time lag is large, S408 processes only the update from the process in Fig. 7, and therefore there are many matching items and the process requires a long time.
However, according to the second embodiment, the scheduled arrival time and date at S501 to S502 in Fig. 16, and the process shown in Fig. 17 is performed immediately before the passenger's scheduled arrival time and date, based on the process at S600 in Fig. 17. Thus, when the passenger performs the process shown in Figs. 9, 10, 11 at the scheduled arrival time, the time lag between the timing of performing the process shown in Fig. 17 and the timing of performing the process shown in Figs. 9, 10, 11 is reduced. This increases the cases in which it is determined as NO at S406 in Fig. 10, and even when it is determined as YES at S406, because S408 processes only the update from the process shown in Fig. 7, there are fewer matching items and the processing time is relatively reduced.

Moreover, the fifth effect can be obtained.
According to the first embodiment, when the time lag between the timing of performing the process shown in Fig. 8 and the timing of performing the process shown in Figs. 9, 10, 11 is large, it is determined as YES at S409 in Fig. 11, which requires the time for the process at S410 and S411. Furthermore, when the time lag is large, S411 processes only the update from the process in Fig. 8, and therefore there are many matching items and the process requires a long time.
However, according to the second embodiment, the scheduled arrival time and date is registered at S501 to S502 in Fig. 16, and the process shown in Fig. 17 is performed immediately before the passenger's scheduled arrival time and date, based on the process at S600 in Fig. 17. Thus, when the passenger performs the process shown in Figs. 9, 10, 11 at the scheduled arrival time, the time lag between the timing of performing the process shown in Fig. 17 and the timing of performing the process shown in Figs. 9, 10, 11 is reduced. This increases the cases in which it is determined as NO at S409 in Fig. 11, and even when it is determined as YES at S409, because S411 processes only the update from the process shown in Fig. 8, there are fewer matching items and the processing time is relatively reduced.

### Third Embodiment

The present embodiment uses the system configuration shown in Fig. 12 or Fig. 14, like the second embodiment.
An explanation is given below of a case in which the advance capturing terminal 80 is installed at the airline checkin counter in the passenger's embarkation country. For the installation of the advance capturing terminal 80 at the visa desk of the Japanese Embassy in the passenger's embarkation country or in the travelling airplane on which the passenger is boarded, or at the entrance to the Japan border immigration area, the installation site may be substituted accordingly, as in the second embodiment.

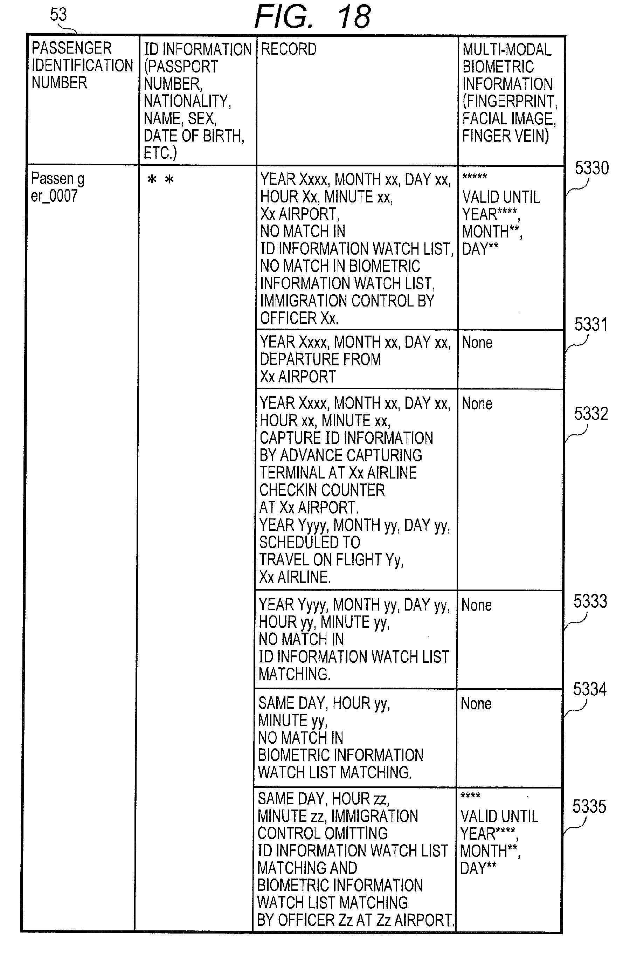

Fig. 18 shows an example of the passenger information 53 according to the third embodiment. The data configuration is same as that shown in Fig. 4. It is assumed in the present embodiment that the passenger entered the country once by the process shown in Fig. 6 and then departed, with results thereof recorded in 5330 and 5331 in Fig. 18. In addition, the ID information and the scheduled arrival time and date captured using the advance capturing terminal 80 are recorded in 5332, and the ID information watch list matched log for the update as a result of the process shown in Fig. 17 is recorded in 5333. Furthermore, the biometric information watch list matched log for the update as a result of the process shown in Fig. 17 is recorded in 5334, and the abbreviated immigration control procedure record and the multi-modal biometric information as a result of the process shown in Figs. 9, 10, and 11 are recorded in 5335.

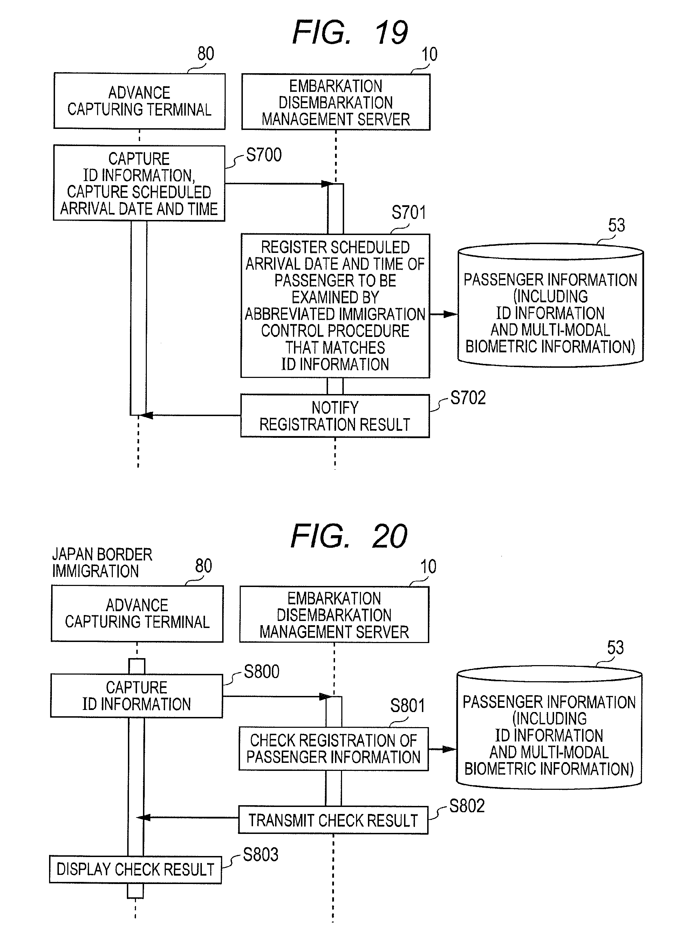

It is assumed in the third embodiment that the passenger entered the country once by the process shown in Fig. 6 and then departed, with results thereof recorded in 5330 and 5331 in Fig. 18. Subsequently, as shown in Fig. 5, the ID information is captured using the advance capturing terminal 80 installed at the airline checkin counter in the passenger's embarkation country (process shown in Fig. 19 is performed and 5332 in Fig. 18 is registered), the ID information watch list matching and the biometric information watch list matching are performed (process shown in Fig. 17 is performed and 5333 and 5334 in Fig. 18 are registered) after the capturing and before arrival at the embarkation disembarkation management client terminal 60 at the Japan border immigration, the embarkation disembarkation management client terminal 60 captures the ID information and the multi-modal biometric information when the passenger arrives at the embarkation disembarkation management client terminal 60 at the Japan border immigration, and performs the abbreviated immigration control procedure (process shown in Figs. 9, 10, 11 is performed and 5335 in Fig. 18 is registered).

Next, the registration of the ID information and the scheduled arrival time and date to the passenger information is described in detail with reference to Fig. 19. Fig. 19 shows a sequence of capturing the ID information and the scheduled arrival time and date using the advance capturing terminal 80 according to the present embodiment and registering them to the passenger information 53.
The advance capturing terminal 80 captures the ID information using the reader connected thereto and the ID information capturing function 61, captures the passenger's scheduled arrival time and date at the Japan border input by the operator, and transmits them to the embarkation disembarkation management server 10 (S700). The embarkation disembarkation management server 10 registers the result received at S700 to the passenger information 53 (S701), and notifies the advance capturing terminal 80 that the registration is completed (S702). One example of the contents registered to the passenger information 53 is 5332 in Fig. 18.

According to the third embodiment, the effects (first to third effects) similar to those of the first embodiment can be obtained. Furthermore, because the scheduled arrival time is registered at S700 to S701 in Fig. 19 and the process shown in Fig. 17 is performed immediately before the passenger's scheduled arrival time and date based on the process at S600 in Fig. 17 (see Fig. 5), effects similar to those of the second embodiment (fourth and fifth effects) can be obtained.

### Fourth Embodiment

The present embodiment uses the system configuration shown in Fig. 14 like the second embodiment.
The present embodiment, by the process shown in Fig. 20, determines whether the passenger whose ID information was captured using the advance capturing terminal 80 installed at the entrance to the Japan border immigration area is registered to the passenger information 53, and displays the determination result on the advance capturing terminal 80.

The determination process to see whether the passenger is registered to the passenger information 53 is described below with reference to Fig. 20.
First, the advance capturing terminal 80 captures the ID information using the reader connected thereto and the ID information capturing function 61, and transmits it to the embarkation disembarkation management server 10 (S800). The embarkation disembarkation management server 10 checks whether or not any record corresponding to the ID information received at S800 is in the passenger information 53 (S801), and responds to the advance capturing terminal 80 with the result (S802). The advance capturing terminal 80 displays the captured check result.

This process allows for checking whether or not the passenger is registered to the passenger information at the entrance to the Japan border immigration area. By performing the process shown in Fig. 20 at the entrance to the Japan border immigration area and dividing, based on the result of S803, passengers into a group of the passengers to be examined by the abbreviated immigration control procedure (passengers registered to the passenger information 53) and a group of passengers to be examined by the normal immigration control procedure (passengers not registered to the passenger information 53) to line them up in different groups in front of the embarkation disembarkation management client terminals 60 with respect to each group, the following effects can be obtained in comparison with a case of not dividing them. (1) Waiting time of the passengers to be examined by the abbreviated immigration control procedure for the embarkation disembarkation management client terminal 60 can be shortened, thereby improving customer satisfaction. (2) Because the waiting queue of whole passengers can be shortened, it can be prevented that the queue extends out of the Japan border immigration area.

### Fifth Embodiment

The present embodiment assumes a case in which a check on the watch list is required at an entrance to an event site or an important infrastructural facility.
According to the present embodiment, as shown in the identification system configuration in Fig. 21, an entrance/exit gate unit 100 installed at the entrance to the facility is installed instead of the embarkation disembarkation management client terminal 60, and a watch list check management server 90 in cooperation with the entrance/exit gate unit 100 is installed instead of the embarkation disembarkation management server 10.

Referring to the identification system configuration diagram shown in Fig. 21, the data center 1 includes the watch list check management server 90, the ID information matching server 20, the identification server 30, the verification server 40, and the DB 50 including the ID information watch list 51, the multi-modal biometric information watch list 52, and the passenger information 53. The entrance/exit gate unit 100 is installed at the entrance to the facility that requires a physical access control including the watch list check, and the watch list registration terminal 70 is installed at the watch list registration facility. These devices are connected to each other via the internal network 9.

The examples of the database shown in Figs. 2, 3, 4 and the examples of the sequences shown in Figs. 6 to 11 represented with the first embodiment are generic, and a similar process is possible with the configuration of the present embodiment shown in Fig. 21. That is, the ID information and the biometric information of the person corresponding to the watch list can be stored in the databases shown in Figs. 2 and 3, respectively, the entrance/exit record can be stored in the database shown in Fig. 4, the ID information can be captured from an event ticket ID or an important infrastructure entry ID card at S100 at the first entry to the facility, the process of registering an entry record at S108 and S109 shown in Fig. 6 can be performed, the process shown in Fig. 7 or 8 can be performed before the second and later entries, the ID information can be captured from the event ticket ID or the important infrastructure entry ID card at S400 at the second and later entries, and the process of registering the entry record at S414 and S415 shown in Figs. 9 to 11 can be performed.

These processes enable an abbreviated entrance check at the entrance to the facility that requires the physical access access control including the watch list check, whereby the effects similar to the first to third effects in the first embodiment can be obtained. Especially when there are many visitors, the effect is high.

For example, in a case where visitors to an event lasting more than one day, employees entering a restricted area of an airport, a seaport, a power plant or the like, or workers temporarily entering the restricted area of the airport, the seaport, or the power plant from the outside for their work repeat an entry to and an exit from the facility every day, they can pass the entrance/exit gate unit smoothly by the abbreviated entrance check at the entrance to the facility. In other words, it can shorten the queue in front of the entrance/exit gate unit, and reduce the waiting time of the visitors.

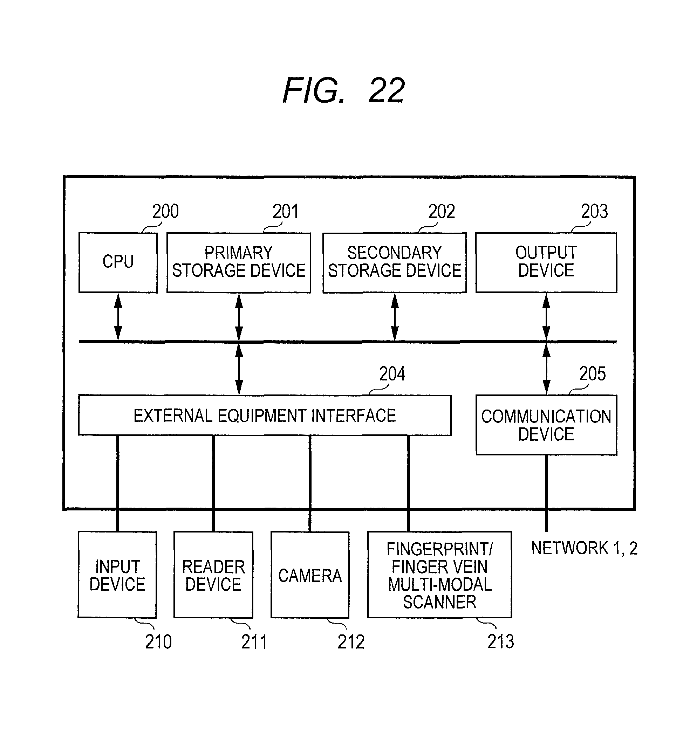

Fig. 22 shows a main hardware configuration of devices constituting the identification system according to the first to fifth embodiments.
Each constituent device of the identification system can be implemented using a general computing machine equipped with a CPU and a storage device. Furthermore, each function that constitutes each device can be embodied on the computing machine by the CPU executing a program stored in the storage device. Each program may be stored in the storage device in the computing machine in advance, or it may be introduced from another device to the storage device via an input/output interface and a medium that can be used by the computing machine, as needed. The medium means, for example, a storage medium removable from the input/output interface, or a communication medium (i.e., wireless or optical network, or a carrier wave or a digital signal that transfers the network).

The embarkation disembarkation management server 10, the ID information matching server 20, the identification server 30, the verification server 40, the embarkation disembarkation management client terminal 60, the watch list registration terminal 70, the advance capturing terminal 80, the watch list check management server 90, and the entrance/exit gate unit 100 that are constituent devices in the first to the fifth embodiments include main constituent units of the hardware configuration shown in Fig. 22. Namely, a main server includes a CPU 200, a primary storage device 201, a secondary storage device 202, an output device 203, a communication device 205, and external equipment interface 204. The embarkation disembarkation management client terminal 60, the watch list registration terminal 70, the advance capturing terminal 80, the watch list check management server 90, and the entrance/exit gate unit 100 that are terminal devices include an input device 210, a reader device 211, a camera 212, and a fingerprint/finger vein multi-modal scanner 213.

For example, the immigration control operation management function 11 of the embarkation disembarkation management server 10, the ID information watch list matching function 21 of the ID information matching server 20, the biometric information watch list matching function 31 of the identification server 30, and the passenger to be examined by abbreviated immigration control procedure matching function 41 of the verification server 40 can be implemented by reading the data stored in the secondary storage device 202 into the primary storage device 201 and performing a computing process with the CPU 200.
The ID information watch list 51, the multi-modal biometric information watch list 52, and the passenger information 53 are implemented by storing the DB in the secondary storage device 202.

The ID information capturing function 61 of the embarkation disembarkation client terminal 60, the advance capturing terminal 80, and the entrance/exit gate unit 100, and the ID information watch list registration function 71 of the watch list registration terminal 70 can be implemented by reading the data captured by the reader device 211 into the primary storage device 201, reading the data stored in the secondary storage device 202 into the primary storage device 201, and performing the computing process with the CPU 200.

The multi-modal biometric information capturing function 62 of the embarkation disembarkation client terminal 60, the advance capturing terminal 80, and the entrance/exit gate unit 100, and the biometric information watch list registration function 72 of the watch list registration terminal 70 can be implemented by reading the data captured by the camera 212 and the fingerprint/finger vein multi-modal scanner 213 into the primary storage device 201, reading the data stored in the secondary storage device 202 into the primary storage device 201, and performing the computing process with the CPU 200.

The present invention should not be limited to the above embodiments, but includes various modifications. For example, the above embodiments are detailed descriptions for comprehensively explaining the present invention, and the invention should not necessarily be limited to include all the configurations described above. Furthermore, a part of a configuration in one embodiment can be replaced by a configuration in another embodiment, and a configuration in one embodiment can be added to a configuration in another embodiment. A part of a configuration in each embodiment can also be added to, deleted from, or replaced by another configuration.

### Description of Reference Numerals

1 data center
6 Japan border immigration
7 watch list registration facility
10 embarkation disembarkation management server 20 ID information matching server
30 identification server
40 verification server
50 database (DB)
51 ID information watch list DB
52 multi-modal biometric information watch list DB
53 passenger information DB
60 embarkation disembarkation management client terminal 70 watch list registration terminal
80 advance capturing terminal
90 watch list check management server
100 entrance/exit gate unit

## Claims

1. An identification system comprising:
a user information DB storing therein user information including biometric information of a user captured from a terminal, a biometric information watch list DB storing therein biometric information of persons on the blacklist captured from the terminal, an identification server having a biometric information watch list matching function of determining whether or not any biometric information that matches the biometric information stored in the user information DB is in the biometric information watch list, and a verification server having a passenger to be examined by abbreviated immigration control procedure matching function of comparing the biometric information stored in the user information DB with the biometric information captured by a capturing function of the biometric information and thereby determining whether both information pieces are of an identical person or not,
wherein the biometric information watch list matching function performs first matching between first biometric information stored in the user information DB and the biometric information in the biometric information watch list,
the passenger to be examined by abbreviated immigration control procedure matching function then performs second matching between the first biometric information in the user information DB and second biometric information captured by the biometric information capturing function, and
if a difference between a first matching time and the current time is within a predetermined time period, a result of the first matching and a result of the second matching are displayed on a screen of the terminal.

2. The identification system according to claim 1, wherein
if the difference between the first matching time and the current time is greater than the predetermined time period,
the biometric information watch list matching function performs third matching between the first biometric information stored in the user information DB and biometric information added to the biometric information watch list after the first matching, and
the first matching result, the second matching result, and the third matching result are displayed on the screen of the terminal.

3. The identification system according to claim 1 or 2, wherein the biometric information captured by the terminal is registered to the user information DB as the first biometric information, and then the biometric information watch list matching function performs the first matching.

4. The identification system according to any one of claims 1 to3,
wherein the user information DB stores therein ID information and scheduled arrival time and date information of the user captured by the terminal, and
when the user information DB includes the scheduled arrival time and date information within the predetermined time period from the current time, the biometric information watch list matching function starts the first matching.

5. The identification system according to any one of claims 1 to 4,
wherein the user information DB stores therein the ID information of the user captured by the terminal, and
the identification system checks whether or not any of the ID information captured by the terminal is in the user information DB and displays a result on the terminal.

6. The identification system according to any one of claims 1 to 5,
wherein the terminal is installed in an immigration facility at a national border, and
the user information DB stores therein information related to an inbound passenger captured by the terminal.

7. The identification system according to any one of claims 1 to 5,
wherein the terminal is installed at an entrance to a facility, and
the user information DB stores therein information of a visitor to the facility.

8. The identification system according to any one of claims 1 to 7,
wherein the user information DB stores therein a single type or a plurality of types of biometric information,
the biometric information watch list stores therein a single type or a plurality of types of the biometric information,
the biometric information capturing function captures a single type or a plurality of types of the biometric information, and, in a case of a plurality of types of the biometric information, captures the biometric information from different devices, or two or more types of the biometric information from a single device, or in a combination thereof, and
the first matching is performed using a single type or a plurality of types of the biometric information, the second matching is performed using a single type or a plurality of types of the biometric information, and the third matching is performed using a single type or a plurality of types of the biometric information.

9. The identification system according to any one of claims 1 to 8,
wherein the user information DB stores therein the ID information captured by the terminal,
the system further includes an ID information watch list DB storing therein ID information of persons on the blacklist,
the system further includes an ID information matching server including an ID information watch list matching function that determines whether or not any ID information that matches the ID information stored in the user information DB is in the ID information watch list DB, and
before or after the first matching, the ID information watch list matching function performs fourth matching between the ID information in the user information DB and the ID information in the ID information watch list and displays a result of the fourth matching on the screen of the terminal along with the first matching result, the second matching result, and the third matching result.

10. An identification system comprising:
a passenger information DB storing therein ID information and biometric information,
an ID information watch list DB storing therein ID information of persons on the blacklist,
a terminal having an ID information capturing function of capturing ID information of a passenger and a biometric information capturing function of capturing the biometric information of a passenger,
an ID information matching server having an ID information watch list matching function of determining whether or not any ID information that matches the ID information stored in the passenger information DB is in the ID information watch list, and
a verification server having a passenger to be examined by abbreviated immigration control procedure matching function of comparing the biometric information stored in the user information DB with the biometric information captured by the biometric information capturing function of the terminal and thereby determining whether both information pieces are of an identical person or not,
wherein the ID information watch list matching function performs first matching between the ID information stored in the passenger information DB and the ID information stored in the ID information watch list,
the passenger to be examined by abbreviated immigration control procedure matching function then performs second matching between the first biometric information stored in the passenger information DB and second biometric information captured by the biometric information capturing function, and
if a difference between a first matching time and the current time is within a predetermined time period, the terminal displays a result of the first matching and a result of the second matching.

11. An identification processing method for identifying a user in a system having a server connected to a terminal via a network, comprising:
a step of storing user information including biometric information of a user captured from the terminal in a user information DB;
a step of storing biometric information of persons on the blacklist captured from the terminal in a biometric information watch list DB;
a biometric information watch list matching step of determining whether or not any biometric information that matches the biometric information stored in the user information DB is in the biometric information watch list in an identification server;
a passenger to be examined by abbreviated immigration control procedure matching step of comparing the biometric information in the user information DB with the biometric information captured by the biometric information capturing function and thereby determining whether or not both biometric information pieces are of an identical person in a verification server;
a step of performing first matching between first biometric information stored in the user information DB and the biometric information in the biometric information watch list at the biometric information watch list matching step;
a step of subsequently performing second matching between the first biometric information stored in the user information DB and second biometric information captured by the biometric information capturing function with the passenger to be examined by abbreviated immigration control procedure matching function; and
a step of, if a difference between a first matching time and the current time is within a predetermined time period, displaying a result of the first matching and a result of the second matching on a screen of the terminal.
